# FASCICULE DE BREVET EUROPEEN

(11) **EP 1 080 618 B1**
(45) Date de publication et mention de la délivrance du brevet: **10.12.2008**
(21) Numéro de dépôt: 99440242.8
(22) Date de dépôt: 03.09.1999
(51) Int. Cl.: A01B 33/02, A01B 33/08

(54) **Machine de binage motorisée pour petites cultures, destinée à l'usage des particuliers.**
Kleinkulturmotorkultivator für Privatpersonen
Small culture motorised cultivating machine for private persons

(43) Date de publication de la demande: 07.03.2001
(73) Titulaire: PUBERT, société anonyme, 85110 Chantonnay (FR)
(72) Inventeur: Pubert, Jean-Pierre, 85110 Chantonnay (FR)
(74) Mandataire: Bioret, Ludovic

(56) Documents cités:
- WO-A-96/14218
- FR-A- 2 544 160
- FR-A- 2 757 595
- US-A- 5 520 253

## Description

La présente invention a pour objet une machine de binage motorisée pour petites cultures, destinée à l'usage des particuliers (voir p.ex. FR-A-2757595).

La taille des jardins potagers diminue de plus en plus, en même temps qu'on observe un engagement croissant pour le jardinage.

Les machines existantes de petite taille appelées moto-bêches, qui permettent de réaliser des opérations de bêchage et de sarclage, ne donnent pas satisfaction, car utilisant un moteur à axe vertical et des transmissions à roue et vis sans fin, qui demandent une puissance moteur importante pour un rendement faible, de l'ordre de 50 à 70 %, dû aux frottements créés par lesdites transmissions et qui génèrent des pertes de puissance de 30 à 50 %.

La machine de binage pour petites cultures selon la présente invention a pour but de remédier à ces inconvénients.

La machine de binage pour petites cultures selon l'invention, telle que revendiquée, comprend un châssis en matière plastique supportant d'une part des outils de travail montés en rotation autour d'un arbre transversal et d'autre part un moteur à axe horizontal entraînant en rotation, par l'intermédiaire d'une courroie et d'un réducteur, lesdits outils de travail.

Conformément à l'invention la chaîne est entraînée par l'axe d'une poulie formant un premier réducteur, ladite poulie étant entraînée, par l'intermédiaire d'une courroie, par l'arbre du moteur à axe horizontal formant un deuxième réducteur.

Le châssis présente une forme globalement rectangulaire et est disposé horizontalement au dessus des outils de travail tandis que sa face supérieure est agencée pour recevoir le moteur à axe horizontal et la poulie d'entraînement de la chaîne.

La chaîne qui permet l'entraînement en rotation de l'arbre des outils rotatifs est protégée par un carter étanche qui traverse le châssis, et qui est solidarisé à la face supérieure dudit châssis. La poulie est maintenue au-dessus du châssis par son axe, inséré dans un palier formé dans la partie du carter qui émerge au-dessus du châssis.

La machine selon l'invention comporte en outre un carter pour la protection des organes du châssis qui peut être équipé d'une poignée permettant de transporter ladite machine.

Les avantages et les caractéristiques de la présente invention ressortiront plus clairement de la description qui suit et qui se rapporte au dessin annexé, lequel en représente un mode de réalisation non limitatif.
- la figure 1 représente une vue en perspective de la machine de binage selon l'invention.
- la figure 2 est une vue de la face avant de la machine selon l'invention.
- la figure 3 est une vue en plan du châssis monobloc de la machine de binage selon la présente invention.
- la figure 4 représente une vue de profil du châssis précédent.

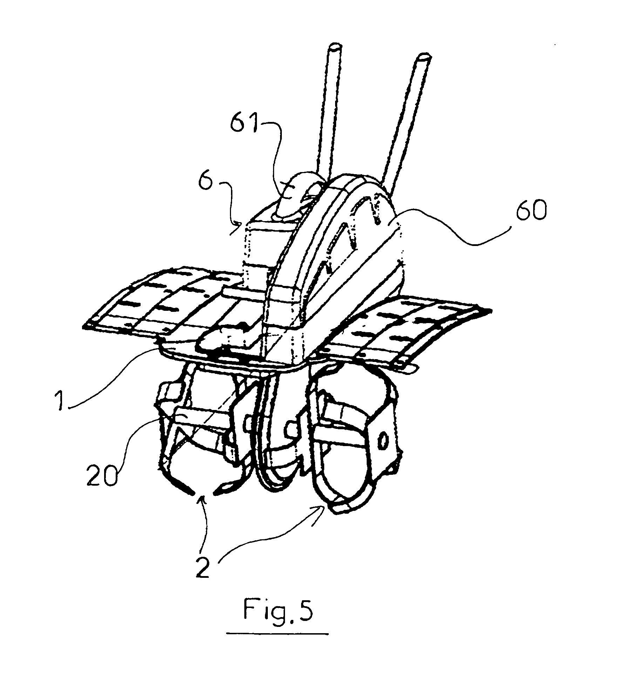

- La figure 5 est une vue en perspective de la machine selon la présente invention avec le capot de fermeture du châssis.

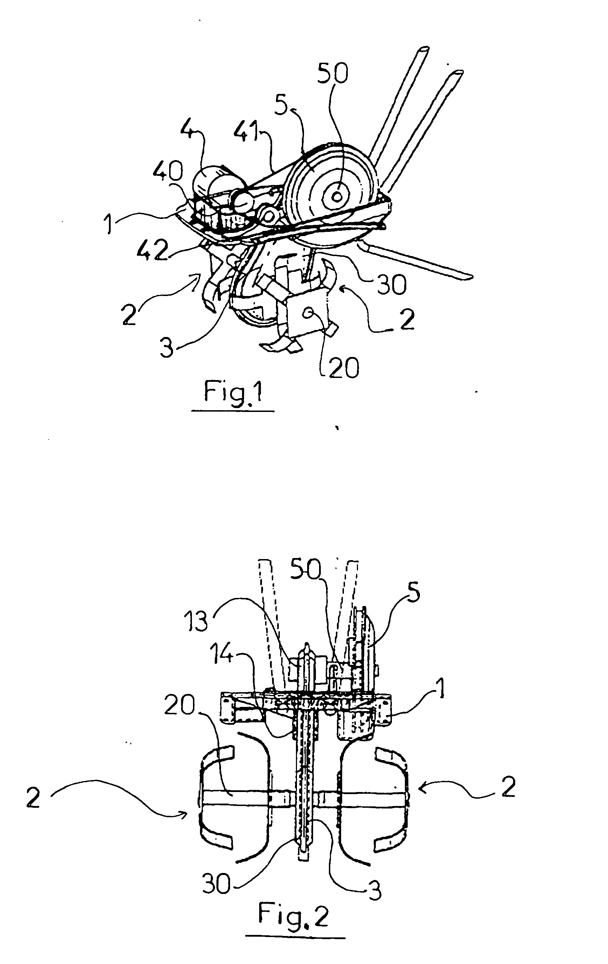

Si on se réfère à la figure 1 on peut voir qu'une machine de binage selon la présente invention est constituée d'un châssis monobloc 1 horizontal supportant deux outils de travail de la terre 2 montés en rotation sous ce dernier autour d'un arbre transversal 20 mû par une chaîne 3, représentée en traits interrompus, engrainée sur une roue dentée, non visible, solidaire de l'arbre 20, protégés par un carter étanche 30. La chaîne 3 est entraînée par l'axe 50 d'une poulie d'entraînement 5 située à l'arrière du châssis 1 au-dessus de ce dernier elle même entraînée par un moteur 4, situé à l'avant du châssis 1, dont l'arbre 40 du moteur 4 est relié à la poulie 5 par une courroie 41 par l'intermédiaire d'un galet tendeur 42.

La machine comprend ainsi deux réducteurs, un premier réducteur formé par la poulie 5 et l'arbre moteur 40 du moteur 4 et un deuxième réducteur formé par l'axe 50 de la poulie 5 et la roue dentée de l'arbre20 entraînant les outils 2, ce qui permet d'obtenir des vitesses de rotation des outils 2 à moins de 200 tours par minutes en évitant les vibrations.

Le châssis 1 est réalisé d'une seule pièce en une matière plastique injectée et présente une forme générale rectangulaire dont la face supérieure est agencée de manière à recevoir d'une part le moteur 4, solidarisé transversalement à la face supérieure du châssis 1, et dont l'axe 40 est horizontal et disposé parallèlement à l'arbre 20 des outils rotatifs 2 et d'autre part la poulie d'entraînement 5.

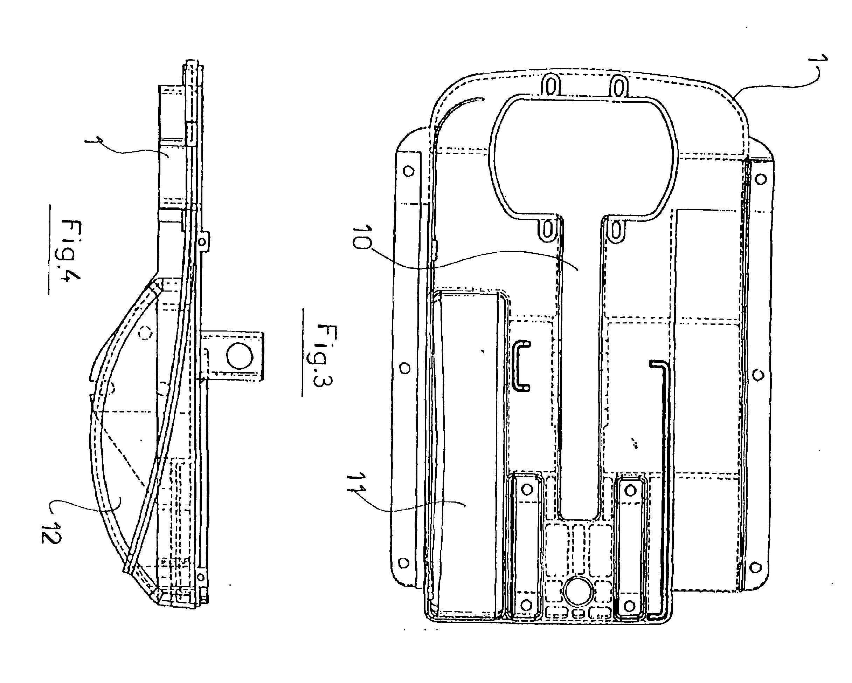

La figure 2 montre que la chaîne 3 et son carter de protection 30 traversent le châssis 1 par une ouverture 10, visible sur la figure 3, pratiquée axialement dans celui-ci et que le carter 30 est solidarisé en plusieurs points, par exemple par vissage, à la face supérieure du châssis 1 par l'intermédiaire d'une platine 14.

La poulie 5 est maintenue au-dessus du châssis 1 par son axe 50 qui est inséré dans un palier 13 formé dans la partie supérieure du carter 30 de protection de la chaîne 3 qui émerge au-dessus du châssis 1.

Si on se réfère également aux figures 3 et 4 on peut voir que le châssis 1 comprend à sa face supérieure une ouverture 11 se prolongeant au-delà de sa face inférieure par un capot de protection 12 permettant de protéger la partie inférieure de la poulie 5, tandis que la partie supérieure de la poulie 5 est protégée par un capot 60 pratiqué dans un carter de fermeture 6, visible sur la figure 4, recouvrant l'arbre moteur 40 et la poulie 5 du châssis 1, solidarisé à ce dernier par encliquetage ou autre moyen de solidarisation rapide.

Le carter de fermeture 6 du châssis 1 est avantageusement équipé d'une poignée 61 permettant de transporter aisément la machine selon l'invention.

La machine selon la présente invention permet donc, grâce à une perte de rendement inférieure à 10%, d'utiliser un moteur moins puissant et de plus petites dimensions que les machines existantes et offre à l'utilisateur, du fait également de la présence d'un châssis en matière plastique, une machine légère facilitant son utilisation par une femme ou une personne agée.

## Revendications

1. Machine de binage motorisée pour des petites cultures destinée à l'usage des particuliers comprenant un châssis (1) supportant des outils de travail (2) montés en rotation autour d'un arbre transversal (20) mû par une chaîne protégée par un carter étanche (30) et entraînée par l'axe (50) d'une poulie d'entraînement (5) et un moteur (4) à axe (40) horizontal entraînant en rotation ladite poulie **caractérisée en ce que** ledit châssis (1) est un châssis monobloc en matière plastique globalement rectangulaire comportant d'une part à sa face supérieure une ouverture (11) se prolongeant au-delà de sa face inférieure par un capot de protection (12) permettant de protéger la partie inférieure de la poulie d'entraînement (5) solidarisée à la face supérieure dudit châssis et d'autre part une ouverture (10) pratiquée axialement dans ledit châssis traversée par la chaîne (3) et son carter de protection (30) et **en ce que** la face supérieure dudit châssis est agencée de manière à recevoir la poulie d'entraînement (5) qui est maintenue par son axe (50) inséré dans un palier (13) formé dans la partie du carter (30) qui émerge au-dessus dudit châssis (1) et le moteur (4) d'axe (40) transversal et parallèle à l'arbre des outils rotatifs et **en ce que** la poulie d'entraînement (5) et l'arbre (40) du moteur (4) forment un premier réducteur.

2. Machine selon la revendication 1 **caractérisée en ce que** l'axe (50) de la poulie d'entraînement (5) et une roue dentée de l'arbre transversal (20) entraînant les outils de travail (2) forment un deuxième réducteur.

3. Machine selon la revendication 2 **caractérisée en ce que** l'arbre (40) du moteur (4) est relié à la poulie (5) par une courroie (41) par l'intermédiaire d'un galet tendeur (42).

4. Machine selon l'une quelconque des revendications précédentes **caractérisée en ce qu'**elle comporte un carter (6) pour la protection des organes

5. Machine selon la revendication 4 **caractérisée en ce que** la partie supérieure de la poulie (5) est protégée par un capot (60) pratiqué dans le carter de fermeture (6) pour la protection des organes du châssis (1).

6. Machine selon la revendication 5 **caractérisée en ce que** le carter de fermeture (6) est équipé d'une poignée (61) permettant de transporter la machine.

## Claims

1. Motorised hoeing machine for small plots intended for the use of private individuals including a chassis (1) supporting working tools (2) mounted in rotation around a cross shaft (20) powered by a chain protected by a sealed housing (30) and driven by the shaft (50) of a drive pulley (5) and a motor (4) with a horizontal shaft (40) driving in a rotational movement the said pulley **characterised in that** the said chassis (1) is a monobloc chassis made of plastic globally rectangular including on the one hand in its upper surface an opening (11) extending beyond its lower surface by a protective cover (12) allowing the protection of the lower part of the drive pulley (5) connected to the upper surface of the said chassis, and on the other hand an opening (10) made axially in the said chassis through which the chain (3) and its protective housing (30) pass and **in that** the upper surface of the said chassis is arranged in such as way as to receive the drive pulley (5) which is held by its shaft (50) inserted in a bearing (13) formed in a part of the housing (30) that emerges above the said chassis (1) and the cross shaft (40) motor (4) parallel to the shaft with the rotary tools and **in that** the drive pulley (5) and the shaft (40) form a first reduction gear.

2. Machine according to claim 1 **characterised in that** the shaft (50) of the drive pulley (5) and a toothed wheel on the cross shaft (20) driving the working tools (2) form a second reduction gear.

3. Machine according to claim 2 **characterised in that** the shaft (40) of the motor (4) is connected to the pulley (5) by a belt (41) by the intermediary of a belt-tensioning idler pulley (42).

4. Machine according to any one of the previous claims in that it includes a housing (6) for the protection of the parts.

5. Machine according to claim 4 **characterised in that** the upper part of the pulley (5) is protected by a cover (60) made in the closing housing (6) for the protection of the parts of the chassis (1).

6. Machine according to claim 5 **characterised in that** the closing housing (6) is equipped with a handle (61) allowing the machine to be carried.

## Patentansprüche

1. Motorisierte Maschine zur Auflockerung des Bodens für kleine Felder zur Nutzung von Einzelpersonen mit Chassis (1) für die Arbeitsgeräte, (2) die in Rotation um eine Querwelle (20) angeordnet sind und mithilfe einer Kette angetrieben wird, welche von einem dichten Gehäuse (30) geschützt und von der Achse (50) einer Kupplungsscheibe (5) sowie einem Motor (4) mit Horizontalachse (40) angetrieben wird, der die entsprechend beschriebene Scheibe in Umtrieb hält, wobei es sich bei dem so genannten Chassis (1) um ein Chassis mit einteiligem Zylinderblock handelt, der aus einem insgesamt rechteckigen Kunststoff besteht und zum einen an seiner Oberseite eine Öffnung (11) aufweist, die sich bis zu seiner Unterseite durch eine Abblendkappe (12) verlängert, wodurch der untere Teil der Kupplungsscheibe (5) geschützt wird, die ihrerseits mit der Oberseite des Chassis verbunden ist, zum anderen eine axial im Chassis angelegte Öffnung (10) hat, durch die die Kette (3) und dessen Schutzgehäuse (30) gezogen ist. Die Oberseite des Chassis ist so zusammengesetzt, dass sie die Kupplungsscheibe (5) aufnimmt, die durch seine in ein Lager (13) eingeführte Achse (50) gehalten wird, das in den Teil des Gehäuses eingefasst ist, der oberhalb des Chassis (1) und des Motors (4) mit Horizontalachse (40) parallel zur Querwelle der Rotationsgeräte herausragt.

2. Es handelt sich um eine Maschine, die der Anforderung der Kategorie 1 entspricht und **dadurch gekennzeichnet ist, dass** die Achse (50) der Kupplungsscheibe (5) und ein Zahnrad der die Arbeitsgeräte (2) antreibenden Querwelle ein zweites Übergangsstück bilden.

3. Es handelt sich um eine Maschine die der Anforderung der Kategorie 2 entspricht und **dadurch gekennzeichnet ist, dass** die Querwelle (40) des Motors (4) mit der der Scheibe (5) mit einem Keilriemen (41) mit Hilfe einer Stützrolle (42) verbunden ist.

4. Es handelt sich um eine Maschine, die den Anforderungen der beiden oben genannten Kategorien entspricht und **dadurch gekennzeichnet ist, dass** sie ein Gehäuse (6) zum Schutz der Bauteile besitzt.

5. Es handelt sich um eine Maschine, die der Anforderung der Kategorie 4 entspricht und **dadurch gekennzeichnet ist, dass** die Oberseite der Scheibe (5) mit einer Haube (60) geschützt ist, die in das Verschlussgehäuse (6) zum Schutz der Bauteile des Chassis (1) eingebaut ist.

6. Es handelt sich um eine Maschine, die der Anforderung der Kategorie 5 entspricht und **dadurch gekennzeichnet ist, dass** das Verschlussgehäuse (6) mit einem Haltegriff für den Transport ausgestattet ist.
